# EUROPEAN PATENT SPECIFICATION

(11) **EP 3 093 573 B1**
(45) Date of publication and mention of the grant of the patent: **08.05.2019**
(21) Application number: 14877932.5
(22) Date of filing: 10.07.2014
(51) Int. Cl.: F25B 1/00, F25B 47/02, F25B 49/02, F25B 13/00, F24F 11/00

(54) **HEAT PUMP HOT AND COLD WATER SYSTEM**
WARM- UND KALTWASSERSYSTEM EINER WÄRMEPUMPE
SYSTÈME D'EAU CHAUDE ET FROIDE À POMPE THERMIQUE

(30) Priority: 10.01.2014 JP 2014003729
(43) Date of publication of application: 16.11.2016
(73) Proprietor: Mitsubishi Electric Corporation, Chiyoda-ku Tokyo 100-8310 (JP)
(72) Inventor: ISHIDA, Kazuyuki, Tokyo 100-8310 (JP); OKOSHI, Yasushi, Tokyo 100-8310 (JP); ITO, Takuya, Tokyo 100-8310 (JP)
(74) Representative: Pfenning, Meinig & Partner mbB
(86) International application number: PCT/JP2014/068456
(87) International publication number: WO 2015/104862

(56) References cited:
- WO-A1-2013/077167
- JP-A- H0 526 496
- JP-A- 2001 272 083
- JP-A- 2012 167 838
- JP-A- 2012 184 876
- JP-A- 2014 126 317

## Description

### Technical Field

The present invention relates to a heat pump water cooling and heating system.

### Background Art

In general, rooms in buildings such as office buildings have air-conditioning units (indoor units) serving as heat sources, and these air-conditioning units (indoor units) are often provided with cold/hot water from cold/hot heat source units. The term cold/hot heat source unit as used herein refers to a unit that produces cold water or hot water using a heat exchanger of a heat pump refrigeration cycle, and the term cold/hot water refers to cold water or hot water produced by the cold/hot heat source unit.

In such a system that is provided with cold/hot water, frost is formed on an air-cooled heat source unit during a heating operation. When frost is formed on an air heat exchanger, the heat exchange efficiency is reduced. Thus, the air-cooled heat source unit performs a defrosting operation, and thereby performs control for defrosting. Further, in this case, the operation performed by the air-cooled heat source unit is similar to a cooling operation, and therefore cold water flows to the load.

There is a conventional air-conditioning apparatus that, in the case where the priority is given to a defrosting operation over a heating operation, stops a heating operation of one refrigeration cycle, when the other refrigeration cycle starts a defrosting operation during the heating operation of the one refrigeration cycle (see, for example, Patent Literature 1).

There is also a conventional air-conditioning apparatus that includes two outdoor units each including a defrosting controller. Each defrosting controller exchanges, with the other defrosting controller, a signal indicating the status of a defrosting operation of the corresponding outdoor unit, thereby preventing the two outdoor units from simultaneously starting the defrosting operation (see, for example, Patent Literature 2).

There is also a conventional multi air-conditioning apparatus in which, when a predetermined certain condition is satisfied (when an operation in a certain operation mode is completed), two patterns of rotation among three outdoor units are alternately switched (see, for example, Patent Literature 3).

There is also a conventional air-conditioning apparatus in which "a plurality of heat source units and one or more indoor units are connected by a high-pressure pipe and a low-pressure pipe; each of the plurality of heat source units includes frost formation detecting unit; and when a frost-formed-state is detected in any one of the heat source units, only the heat source unit in which frost formation is detected performs a defrosting operation, and the other heat source units continue a heating operation" (see, for example, Patent Literature 4).

### Citation List

### Patent Literature

Patent Literature 1: Japanese Unexamined Patent Application Publication No. H05-26496 ([0016], [0017], and Fig. 4)
Patent Literature 2: Japanese Unexamined Patent Application Publication No. 2001-272083 ([0058] - [0063] and Fig. 1)
Patent Literature 3: Japanese Unexamined Patent Application Publication No. 2012-184876 ([0026] and Figs. 1 and 4)
Patent Literature 4: Japanese Unexamined Patent Application Publication No. 2007-271094 ([Claim 1] and Fig. 2)

WO 2013/077167 A discloses a heat-pump-system defrosting operation method which includes: a step of determining, if at least one of heat pumps has already performed a defrosting operation, whether to make a target heat pump that is a determination target start the defrosting operation based on the temperature of an air heat exchanger of the target heat pump and a first threshold temperature; and a step of determining, if none of the plurality of heat pumps has performed the defrosting operation, and if there is a heat pump that is likely to start the defrosting operation next to the target heat pump, whether to make the target heat pump start the defrosting operation, based on the temperature of the air heat exchanger of the target heat pump and a second threshold temperature that is higher than the first threshold temperature. WO 2013/077167 A discloses a heat pump water cooling and heating system according to the preamble of claim 1.

### Summary of Invention

### Technical Problem

However, according to the air-conditioning apparatus disclosed in Patent Literature 1, there is a problem in that cold water flows to the load side during the defrosting operation. There are also problems such that during the defrosting operation, as cold water flows to the load side, the temperature of water that returns to the heat source unit is reduced, so that freezing occurs due to a reduction in water temperature inside the heat exchanger of the heat source unit. There is also a problem in that, because all the heat source units except one performing the defrosting operation are stopped, no hot water flows to the load side from the heat source units having been performing the heating operation, so that there is not enough capacity to respond to a request.

Further, according to the air-conditioning unit disclosed in Patent Literature 2, there is a problem in that if the heat source unit performing the heating operation stops, only the heat source unit performing the defrosting operation keeps its operation, so that cold water flows to the load side as in the case of Patent Literature 1. Accordingly, there are also problems such that the temperature of water that returns to the heat source unit is reduced, so that freezing occurs due to a reduction in water temperature inside the heat exchanger of the heat source unit.

Further, according to the multi air-conditioning apparatus disclosed in Patent Literature 3, there is a problem in that if the heat source units performing the heating operation stop, only the heat source unit performing the defrosting operation keeps its operation, so that cold water flows to the load side as in the case of Patent Literature 1. Accordingly, there are also problems such that the temperature of water that returns to the heat source unit is reduced, so that freezing occurs due to a reduction in water temperature inside the heat exchanger of the heat source unit.

Further, according to the air-conditioning apparatus disclosed in Patent Literature 4, there is a problem in that if the heat source units performing the heating operation stop, only the heat source unit performing the defrosting operation keeps its operation, so that cold water flows to the load side as in the case of Patent Literature 1. Accordingly, there are also problems such that the temperature of water that returns to the heat source unit is reduced, so that freezing occurs due to a reduction in water temperature inside the heat exchanger of the heat source unit.

The present invention has been made in view of the problems described above, and aims to provide a heat pump water cooling and heating system that inhibits freezing due to a reduction in water temperature inside a heat exchanger of a heat source unit during the defrosting operation.

### Solution to Problem

The present invention is as defined in the appended independent claim.

A heat pump water cooling and heating system according to the present invention includes: a first heat source unit including a water heat exchanger and an air heat exchanger; a second heat source unit including a water heat exchanger and an air heat exchanger; a joining point where cold/hot water flowing out of the water heat exchanger of the first heat source unit and cold/hot water flowing out of the second heat source unit join; and a control unit configured to switch a heating operation in which the air heat exchanger serves as an evaporator and a defrosting operation in which the air heat exchanger serves as a condenser, wherein, in a case where one heat source unit of the first heat source unit and the second heat source unit performs a heating operation and an other heat source unit of the first heat source unit and the second heat source unit performs a defrosting operation, the control unit is configured to stop the defrosting operation of the other heat source unit and reduce a volume of water flowing out of the water heat exchanger of the other heat source unit to the joining point when the heating operation of the one heat source unit becomes inexecutable.

### Advantageous Effects of Invention

According to the present invention, when no heat source unit is performing a heating operation, the operation of the heat source unit performing a defrosting operation is stopped. Therefore, it is possible to inhibit an excessive flow of cold water to the load side. Accordingly, it is possible to inhibit freezing due to the reduction in water temperature inside the heat exchanger of the heat source unit during the defrosting operation.

### Brief Description of Drawings

Fig. 1 is a schematic diagram illustrating the configuration of a heat pump water cooling and heating system 100 according to Embodiment 1 of the present invention.
Fig. 2 is a diagram illustrating the operation of the heat pump water cooling and heating system 100 according to Embodiment 1 of the present invention.
Fig. 3 is a flowchart illustrating the operation of the heat pump water cooling and heating system 100 according to Embodiment 1 of the present invention.

### Description of Embodiments

### Embodiment 1

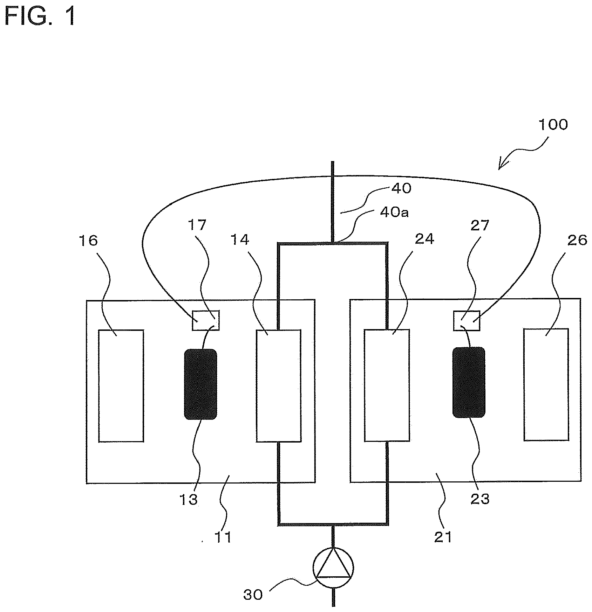

Fig. 1 is a schematic diagram illustrating the configuration of a heat pump water cooling and heating system 100 according to Embodiment 1 of the present invention. As illustrated in Fig. 1, the heat pump water cooling and heating system 100 of Embodiment 1 includes heat source units 11 and 21, a cold/hot water pump 30, and a pipe 40.

The heat source unit 11 heats or cools supplied cold/hot water, and includes a compressor 13, a water heat exchanger 14, an air heat exchanger 16, and a control unit 17. The heat source unit 21 heats or cools supplied cold/hot water, and includes a compressor 23, a water heat exchanger 24, an air heat exchanger 26, and a control unit 27. The heat source units 11 and 21 are provided with cold/hot water that passes through each of a plurality of indoor units such as, for example, air-conditioning units (not illustrated).

The compressor 13, a four-way valve (not illustrated), the water heat exchanger 14, an expansion valve (not illustrated), the air heat exchanger 16, and other devices are connected to form a refrigerant circuit. Further, the compressor 23, a four-way valve (not illustrated), the water heat exchanger 24, an expansion valve (not illustrated), the air heat exchanger 26, and other devices are connected to form a refrigerant circuit. That is, refrigerant circuits corresponding to the respective heat source units 11 and 21 are provided.

The compressors 13 and 23 compress refrigerant flowing in a refrigeration cycle into a high-temperature high-pressure refrigerant, and discharge the high-temperature high-pressure refrigerant. The water heat exchangers 14 and 24 exchange heat between water supplied from the cold/hot water pump 30 and refrigerant supplied to the water heat exchangers 14 and 24. During the heating operation, the water supplied from the cold/hot water pump 30 is heated in the water heat exchangers 14 and 24. During the defrosting operation, the water supplied from the cold/hot water pump 30 is cooled in the water heat exchangers 14 and 24.

The air heat exchangers 16 and 26 exchange heat between air introduced from an outdoor fan (not illustrated) and refrigerant circulating in the refrigerant circuit. During the heating operation, the air heat exchangers 16 and 26 serve as evaporators. During the defrosting operation, the air heat exchangers 16 and 26 serve as condensers. During the heating operation, when the air heat exchangers 16 and 26 perform heat exchange, the temperature of the air introduced from the outdoor fan to the air heat exchangers 16 and 26 is reduced, and the temperature of the refrigerant circulating in the refrigerant circuits is increased. During the defrosting operation, when the air heat exchangers 16 and 26 perform heat exchange, the temperature of the air introduced from the outdoor fan to the air heat exchangers 16 and 26 is increased, and the temperature of the refrigerant circulating in the refrigerant circuits is reduced.

The control units 17 and 27 include detecting units for detecting the control status of the heat source units, and are connected to each other by wires or wirelessly. The control units 17 and 27 may be implemented by, for example, hardware such as a circuit device that realizes the functions thereof, or software that runs on an arithmetic device such as a microcomputer or a CPU.

The control unit 17 controls the heat source unit 11 based on, for example, a value of the frequency of the compressor 13 and information output from the control unit 27. Further, the control unit 17 outputs information on the operational status (for example, the operational status of the heating operation or the defrosting operation) of the heat source unit 11 and information on the frequency of the compressor 13.

The control unit 27 controls the heat source unit 21 based on, for example, a value of the frequency of the compressor 23 and information output from the control unit 17. Further, the control unit 27 outputs information on the operational status (for example, the operational status of the heating operation or the defrosting operation) of the heat source unit 21 and information on the frequency of the compressor 23.

The cold/hot water pump 30 circulates and supplies the cold/hot water. More specifically, the cold/hot water pump 30 circulates and supplies, to the water heat exchanger 14 and the water heat exchanger 24, the cold/hot water that passes through a heat load source (not illustrated). The cold/hot water flowing out of the water heat exchangers 14 and 24 enters into the pipe 40, and then is supplied to the load side. The refrigerant flowing out of the water heat exchangers 14 and 24 join at a joining point 40a.

The following describes a cooling operation of the heat pump water cooling and heating system 100. Water is supplied by the cold/hot water pump 30 to the water heat exchangers 14 and 24. The water supplied to the water heat exchangers 14 and 24 by the cold/hot water pump 30 is subjected to heat exchange while passing through the water heat exchangers 14 and 24, respectively, flow out at an increased (a reduced) temperature, join at the joining point 40a, and flow to the load side.

Next, a description will be given of control performed by the control units 17 and 27 in: (1) a case where the compressor 13 fails and stops while the heat source unit 11 is performing the heating operation and the heat source unit 21 is performing the defrosting operation; and (2) a case where the compressor 23 fails and stops while the heat source unit 11 is performing the defrosting operation and the heat source unit 21 is performing the heating operation.

(1) Case Where Compressor 13 Fails and Stops While Heat Source Unit 11 is Performing Heating Operation and Heat Source Unit 21 is Performing Defrosting Operation

When the compressor 13 fails and stops, the control unit 17 outputs information on the operational status of the heat source unit 11 and information on the frequency of the compressor 13. Then, based on the information on the operational status of the heat source unit 11 and the information on the frequency of the compressor 13 that are output from the control unit 17, the control unit 27 stops the defrosting operation of the heat source unit 21. In this case, the information on the operational status of the heat source unit 11 is, for example, information indicating that the heating operation of the heat source unit 11 is stopped. Further, the information on the frequency of the compressor 13 is, for example, information indicating that the frequency of the compressor 13 is 0 Hz.

When the compressor 13 recovers from the failure and is started, the control unit 17 outputs information on the operational status of the heat source unit 11 and information on the frequency of the compressor 13. Then, based on the information on the operational status of the heat source unit 11 and the information on the frequency of the compressor 13 that are output from the control unit 17, the control unit 27 starts the defrosting operation of the heat source unit 21. In this case, the information on the operational status of the heat source unit 11 is, for example, information indicating that the heat source unit 11 is performing the heating operation. Further, the information on the frequency of the compressor 13 is, for example, information indicating that the frequency of the compressor 13 is greater than 0 Hz.

(2) Case Where Compressor 23 Fails and Stops While Heat Source Unit 11 is Performing Defrosting Operation and Heat Source Unit 21 is Performing Heating Operation

When the compressor 23 fails and stops, the control unit 27 outputs information on the operational status of the heat source unit 21 and information on the frequency of the compressor 23. Then, based on the information on the operational status of the heat source unit 21 and the information on the frequency of the compressor 23 that are output from the control unit 27, the control unit 17 stops the defrosting operation of the heat source unit 11. In this case, the information on the operational status of the heat source unit 21 is, for example, information indicating that the heating operation of the heat source unit 21 is stopped. Further, the information on the frequency of the compressor 23 is, for example, information indicating that the frequency of the compressor 23 is 0 Hz.

When the compressor 23 recovers from the failure and is started, the control unit 27 outputs information on the operational status of the heat source unit 21 and information on the frequency of the compressor 23. Then, based on the information on the operational status of the heat source unit 21 and the information on the frequency of the compressor 23 that are output from the control unit 27, the control unit 17 starts the defrosting operation of the heat source unit 11. In this case, the information on the operational status of the heat source unit 21 is, for example, information indicating that the heat source unit 21 is performing the heating operation. Further, the information on the frequency of the compressor 23 is, for example, information indicating that the frequency of the compressor 23 is greater than 0 Hz.

Although the example has been described in which the control unit 17 outputs the information on the operational status of the heat source unit 11 and the information on the frequency of the compressor 13, the present invention is not limited thereto. In the case where the control unit 27 is capable of determining the operational status of the heat source unit 11, the control unit 17 may output either piece of information alone.

Further, although the example has been described in which the control unit 27 outputs the information on the operational status of the heat source unit 21 and the information on the frequency of the compressor 23, the present invention is not limited thereto. In the case where the control unit 17 is capable of determining the operational status of the heat source unit 21, the control unit 27 may output either piece of information alone.

Further, although the example has been described in which the control unit 17 is the element of the heat source unit 11 and the control unit 27 is the element of the heat source unit 21, the control unit 17 may be provided separately from the heat source unit 11, and the control unit 27 may be provided separately from the heat source unit 21.

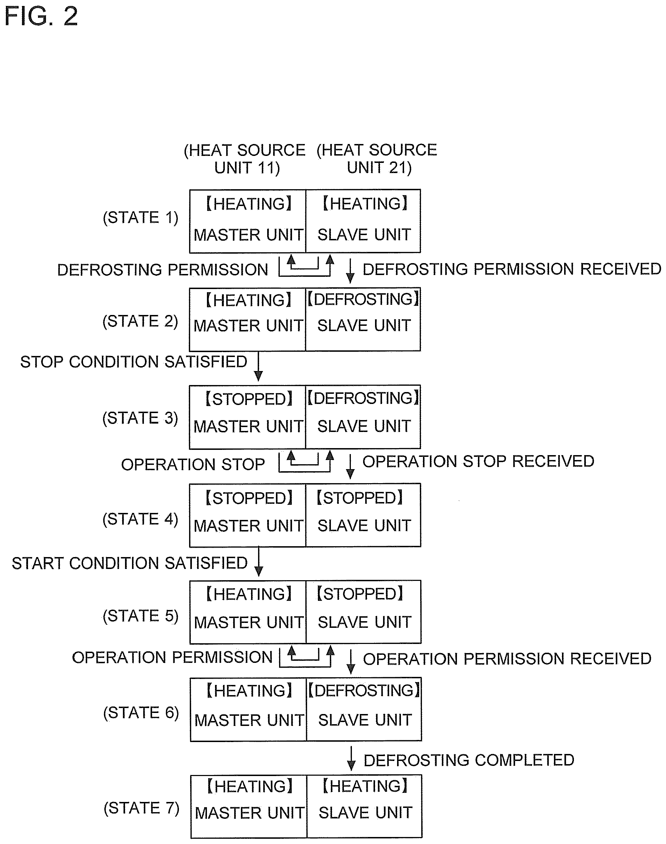

Fig. 2 is a diagram illustrating the operation of the heat pump water cooling and heating system 100 according to Embodiment 1 of the present invention.

The following describes the process of transition of the status of the heat source units 11 and 21 from (state 1) to (state 7) step by step with reference to Fig. 2. Note that a master unit in the left one of two rectangles illustrated in each of (state 1) through (state 7) of Fig. 2 corresponds to the heat source unit 11, and a slave unit in the right one of the two rectangles corresponds to the heat source unit 21.

### (State 1)

When the heat source unit 11 performs the heating operation and the heat source unit 21 performs the heating operation, the control unit 17 outputs a signal for permitting the defrosting operation of the heat source unit 21. Then, the control unit 27 controls the heat source unit 21 to start the defrosting operation, based on the signal for permitting the defrosting operation of the heat source unit 21 that is output from the control unit 17.

### (State 2)

When in (state 1) the control unit 27 controls the heat source unit 21 to start the defrosting operation, then the state shifts to a state in which the heat source unit 11 performs the heating operation and the heat source unit 21 performs the defrosting operation. Then, if the compressor 13 fails and the frequency of the compressor 13 becomes 0 Hz, a stop condition for stopping the heating operation of the heat source unit 11 is satisfied. That is, the heating operation of the heat source unit 11 is stopped.

### (State 3)

When in (state 2) the heating operation of the heat source unit 11 is stopped, then the state shifts to a state in which the heating operation of the heat source unit 11 is stopped and the defrosting operation of the heat source unit 21 is performed. Then, the control unit 17 outputs a signal for stopping the defrosting operation of the heat source unit 21. The control unit 27 controls the heat source unit 21 to stop the defrosting operation, based on the signal for stopping the defrosting operation that is output from the control unit 17.

### (State 4)

When in (state 3) the control unit 27 stops the defrosting operation of the heat source unit 21, then the operations of the heat source unit 11 and the heat source unit 21 are stopped. Then, if the compressor 13 recovers from the failure and the frequency of the compressor 13 becomes greater than 0 Hz, a start condition for starting the heating operation of the heat source unit 11 is satisfied. Then, the control unit 17 controls the heat source unit 11 to start the heating operation.

### (State 5)

When in (state 4) the control unit 17 controls the heat source unit 11 to start the heating operation, then the heating operation of the heat source unit 11 is performed and the operation of the heat source unit 21 is stopped. Then, the control unit 17 outputs a signal for permitting the defrosting operation of the heat source unit 21. The control unit 27 controls the heat source unit 21 to start the defrosting operation, based on the signal for permitting the defrosting operation that is output from the control unit 17.

### (State 6)

When in (state 5) the control unit 27 controls the heat source unit 21 to start the defrosting operation, then the heating operation of the heat source unit 11 is performed and the defrosting operation of the heat source unit 21 is performed. Then, the control unit 27 controls the heat source unit 21 to switch from the defrosting operation to the heating operation.

### (State 7)

When in (state 6) the control unit 27 controls the heat source unit 21 to switch from the defrosting operation to the heating operation, then the heating operations of the heat source unit 11 and the heat source unit 21 are performed.

Note that, in general, switching from the heating operation to the defrosting operation is performed by stopping the operation of a compressor during the heating operation, switching the four-way valve to a cooling side, and restarting the operation of the compressor. Further, in general, switching from the defrosting operation to the heating operation is performed by stopping the operation of a compressor during the defrosting operation, switching the four-way valve to a heating side, and restarting the operation of the compressor.

Although the example has been described in which the master unit is the heat source unit 11 and the slave unit is the heat source unit 21, the present invention is not limited thereto. The master unit may be the heat source unit 21, and the slave unit may be the heat source unit 11.

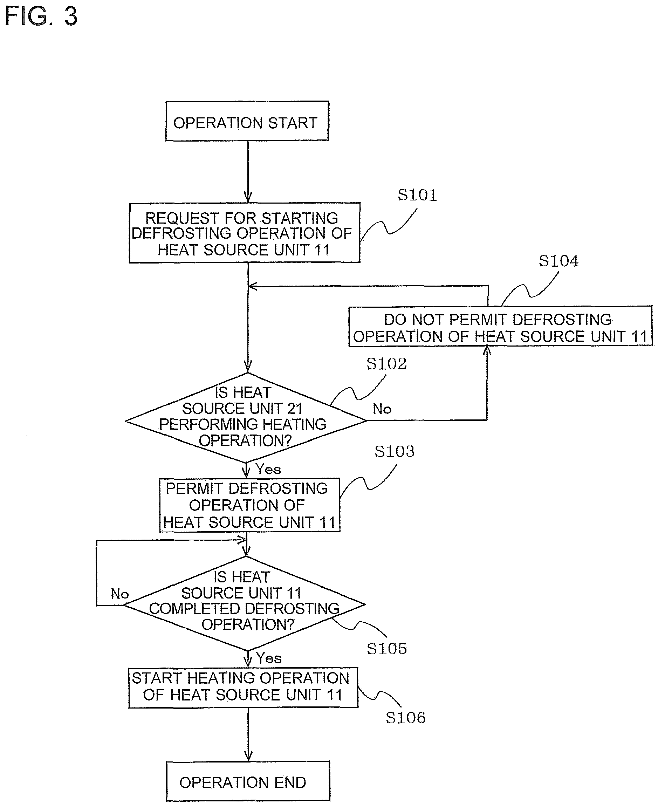

Fig. 3 is a flowchart illustrating the operations of the control units 17 and 27 according to Embodiment 1 of the present invention. With reference to Fig.2, the description has been given of the example of control by the control units 17 and 27 in the case where the compressor 13 fails and stops while the heat source units 11 and 21 are performing the heating operation. On the other hand, with reference to Fig. 3, a description will be given of an example of control performed by the control units 17 and 27 (steps S101 through S106) in the case where a request for starting the defrosting operation of the heat source unit 11 is made while the heat source unit 11 is performing the heating operation and the heat source unit 21 is performing the defrosting operation.

In step S101, the control unit 17 outputs information indicating that the heat source unit 11 is required to start the defrosting operation from the outside. Then, the process proceeds to step S102. In step S102, when the control unit 17 receives, from the control unit 17, the information indicating that the heat source unit 11 is required to start the defrosting operation, the control unit 27 acquires information indicating whether the heat source unit 21 is performing the heating operation.

If in step S102 the control unit 27 acquires information indicating that the heat source unit 21 is performing the heating operation (Yes in step S102), the process proceeds to step S103. Then, in step S103, the control unit 27 outputs information for permitting the heat source unit 11 to start the defrosting operation. Then, the process proceeds to step S105. On the other hand, if in step S102 the control unit 27 acquires information indicating that the heat source unit 21 is not performing the heating operation (No in step S102), the process proceeds to step S104. Then, in step S104, the control unit 27 outputs information for not permitting the heat source unit 11 to start the defrosting operation. Then, the process returns to step S102.

In step S105, the control unit 27 determines whether information indicating that the heat source unit 11 is completed the defrosting operation is input from the control unit 17. If in step S105 the control unit 27 determines that the heat source unit 11 is completed the defrosting operation (Yes in step S105), the process proceeds to step S106. Then, in step S106, the control unit 17 controls the heat source unit 11 to start the heating operation. On the other hand, if in step S105 the control unit 27 determines that the heat source unit 11 is not completed the defrosting operation (No in step S105), step S105 is repeated.

Although the description has been given of control performed in the case where the control unit 17 receives information indicating to start the defrosting operation, the present invention is not limited thereto. For example, the control unit 27 may perform such control upon information indicating to start the defrosting operation.

As described above, the heat pump water cooling and heating system 100 according to Embodiment 1 stops the operation of the heat source unit performing the defrosting operation in the case where there is no heat source unit performing the heating operation. Therefore, it is possible to inhibit excessive flow of cold water to the load side. Accordingly, it is possible to inhibit freezing due to the reduction in water temperature inside the heat exchanger of the heat source unit during the defrosting operation.

Although the description has been given of the example in which the control unit 17 and the control unit 27 are provided, the present invention is not limited thereto. For example, instead of the control unit 17 and the control unit 27, a control unit that outputs information on the operational status of the heat source units 11 and 21 and information on the frequency of the compressors 13 and 23 may be provided. Even with this configuration, it is possible to provide the effects described above.

The specific number of heat source units is not limited to the example described above. For example, even in the case where two or more heat source units are employed, the present invention is applicable. For example, in the case where three heat source units are provided and, while two of the heat source units are performing the heating operations and the other one heat source unit is performing the defrosting operation, the heating operations of the two heat source units are stopped, the control unit stops the defrosting operation of the other one heat source unit.

The heat source unit 11 corresponds to a first heat source unit of the present invention, and the heat source unit 21 corresponds to a second heat source unit of the present invention. Further, the control unit 17 corresponds to a first control unit of the present invention, and the control unit 27 corresponds to a second control unit of the present invention.

### Reference Signs List

11 heat source unit 13 compressor 14 water heat exchanger 16 air heat exchanger 17 control unit 21 heat source unit 23 compressor 24 water heat exchanger 26 air heat exchanger 27 control unit 30 cold/hot water pump 40 pipe 40a joining point 100 heat pump water cooling and heating system

## Claims

1. A heat pump water cooling and heating system comprising:
a first heat source unit (11) including a water heat exchanger (14) and an air heat exchanger (16);
a second heat source unit (21) including a water heat exchanger (24) and an air heat exchanger (26);
and a control unit (17, 27) configured to switch a heating operation in which the air heat exchanger (16, 26) serves as an evaporator and a defrosting operation in which the air heat exchanger (16, 26) serves as a condenser, **characterized by** further comprising:
a joining point (40a) where cold or hot water flowing out of the water heat exchanger (14) of the first heat source unit (11) and cold or hot water flowing out of the water heat exchanger (24) of the second heat source unit (21) join,
wherein, in a case where one heat source unit (11, 21) of the first heat source unit (11) and the second heat source unit (21) performs the heating operation and an other heat source unit (11, 21) of the first heat source unit (11) and the second heat source unit (21) performs the defrosting operation, the control unit (17, 27) is configured to stop the defrosting operation of the other heat source unit (11, 21) and reduce a volume of water flowing out of the water heat exchanger of the other heat source unit to the joining point when the heating operation of the one heat source unit (11, 21) becomes inexecutable.

2. The heat pump water cooling and heating system of claim 1, wherein, in a case where the heating operation of the one heat source unit (11, 21) becomes executable and is started after the defrosting operation of the other heat source unit (11, 21) is stopped, the control unit (17, 27) is configured to start the defrosting operation of the other heat source unit (11, 21).

3. The heat pump water cooling and heating system of claim 1 or 2,
wherein each of the first heat source unit (11) and the second heat source unit (21) includes a compressor (13, 23), and
wherein the control unit (17, 27) is configured to determine that the heating operation of the one heat source unit (11, 21) is inexecutable when the compressor (13, 23) of the one heat source unit (11, 21) fails.

4. The heat pump water cooling and heating system of any one of claims 1 to 3, wherein the control unit (17, 27) includes
a first control unit (17) configured to control the first heat source unit (11), and (21),
a second control unit (27) configured to control the second heat source unit
wherein, in a case where the first heat source unit (11) performs the defrosting operation and the second heat source unit (21) performs the heating operation, the first control unit (17) is configured to stop the defrosting operation of the first heat source unit (11) and reduce a volume of water flowing out of the water heat exchanger of the first heat source unit (11) to the joining point when the heating operation of the second heat source unit (21) becomes inexecutable, and
wherein, in a case where the first heat source unit (11) performs the heating operation and the second heat source unit (21) performs the defrosting operation, the second control unit (27) is configured to stop the defrosting operation of the second heat source unit (21) and reduce a volume of water flowing out of the water heat exchanger of the second heat source unit (21) to the joining point when the heating operation of the first heat source unit (11) becomes inexecutable.

5. The heat pump water cooling and heating system of claim 4,
wherein, in a case where the heating operation of the second heat source unit (21) becomes executable and is started after the defrosting operation of the first heat source unit (11) is stopped, the first control unit (17) is configured to start the defrosting operation of the first heat source unit (11), and
wherein, in a case where the heating operation of the first heat source unit (11) becomes executable and is started after the defrosting operation of the second heat source unit (21) is stopped, the second control unit (27) is configured to start the defrosting operation of the second heat source unit (21).

6. The heat pump water cooling and heating system of claim 4 or 5,
wherein each of the first heat source unit (11) and the second heat source unit (21) includes a compressor (13, 23),
wherein the first control unit (17) is configured to determine that the heating operation of the second heat source unit (21) is inexecutable when the compressor (23) of the second heat source unit (21) fails, and
wherein the second control unit (27) is configured to determine that the heating operation of the first heat source unit (11) is inexecutable when the compressor (13) of the first heat source unit (11) fails.

## Patentansprüche

1. Wärmepumpen-Wasserkühlungs- und Erwärmungssystem, umfassend:
eine erste Wärmequelleneinheit (11), aufweisend einen Wasserwärmetauscher (14) und einen Luftwärmetauscher (16);
eine zweite Wärmequelleneinheit (21), aufweisend einen Wasserwärmetauscher (24) und einen Luftwärmetauscher (26);
und eine Steuereinheit (17, 27), die eingerichtet ist, einen Erwärmungsbetrieb, bei dem der Luftwärmetauscher (16, 26) als ein Verdampfer dient, und einen Entfrostungsbetrieb, bei dem der Luftwärmetauscher (16, 26) als ein Kondensator dient, zu schalten,
**dadurch gekennzeichnet, dass** es ferner umfasst:
eine Zusammenflussstelle (40a), an der Kalt- oder Warmwasser, ausströmend aus dem Wasserwärmetauscher (14) der ersten Wärmequelleneinheit (11), und Kalt- oder Warmwasser, ausströmend aus dem Wasserwärmetauscher (24) der zweiten Wärmequelleneinheit (21), zusammenfließen,
wobei in einem Fall, wo eine Wärmequelleneinheit (11, 21) der ersten Wärmequelleneinheit (11) und der zweiten Wärmequelleneinheit (21) den Erwärmungsbetrieb durchführt, und eine andere Wärmequelleneinheit (11, 21) der ersten Wärmequelleneinheit (11) und der zweiten Wärmequelleneinheit (21) den Entfrostungsbetrieb durchführt, die Steuereinheit (17, 27) eingerichtet ist, den Entfrostungsbetrieb der anderen Wärmequelleneinheit (11, 21) zu stoppen und ein Volumen von Wasser, ausströmend aus dem Wasserwärmetauscher der anderen Wärmequelleneinheit zur Zusammenflussstelle, zu reduzieren, wenn der Erwärmungsbetrieb der einen Wärmequelleneinheit (11, 21) nicht mehr ausführbar wird.

2. Wärmepumpen-Wasserkühlungs- und Erwärmungssystem nach Anspruch 1, wobei in einem Fall, wenn der Erwärmungsbetrieb der einen Wärmequelleneinheit (11, 21) ausführbar wird und gestartet wird, nachdem der Entfrostungsbetrieb der anderen Wärmequelleneinheit (11, 21) gestoppt wurde, die Steuereinheit (17, 27) eingerichtet ist, den Entfrostungsbetrieb der anderen Wärmequelleneinheit (11, 21) zu starten.

3. Wärmepumpen-Wasserkühlungs- und Erwärmungssystem nach Anspruch 1 oder 2,
wobei jede von der ersten Wärmequelleneinheit (11) und der zweiten Wärmequelleneinheit (21) einen Verdichter (13, 23) aufweist, und wobei die Steuereinheit (17, 27) eingerichtet ist, zu bestimmen, dass der Erwärmungsbetrieb der einen Wärmequelleneinheit (11, 21) nicht ausführbar ist, wenn der Verdichter (13, 23) der einen Wärmequelleneinheit (11, 21) ausfällt.

4. Wärmepumpen-Wasserkühlungs- und Erwärmungssystem nach einem der Ansprüche 1 bis 3, wobei die Steuereinheit (17, 27) aufweist:
eine erste Steuereinheit (17), die eingerichtet ist, die erste Wärmequelleneinheit (11) zu steuern, und eine zweite Steuereinheit (27), die eingerichtet ist, die zweite Wärmequelleneinheit (21) zu steuern,
wobei in einem Fall, wenn die erste Wärmequelleneinheit (11) den Entfrostungsbetrieb durchführt, und die zweite Wärmequelleneinheit (21) den Erwärmungsbetrieb durchführt, die erste Steuereinheit (17) eingerichtet ist, den Entfrostungsbetrieb der ersten Wärmequelleneinheit (11) zu stoppen und ein Volumen von Wasser, ausströmend aus dem Wasserwärmetauscher der ersten Wärmequelleneinheit (11) zur Zusammenflussstelle, zu reduzieren, wenn der Erwärmungsbetrieb der zweiten Wärmequelleneinheit (21) nicht mehr ausführbar wird, und
wobei in einem Fall, wenn die erste Wärmequelleneinheit (11) den Erwärmungsbetrieb durchführt, und die zweite Wärmequelleneinheit (21) den Entfrostungsbetrieb durchführt, die zweite Steuereinheit (27) eingerichtet ist, den Entfrostungsbetrieb der zweiten Wärmequelleneinheit (21) zu stoppen und ein Volumen von Wasser, ausströmend aus dem Wasserwärmetauscher der zweiten Wärmequelleneinheit (21) zur Zusammenflussstelle, zu reduzieren, wenn der Erwärmungsbetrieb der ersten Wärmequelleneinheit (11) nicht mehr ausführbar wird.

5. Wärmepumpen-Wasserkühlungs- und Erwärmungssystem nach Anspruch 4,
wobei in einem Fall, wenn der Erwärmungsbetrieb der zweiten Wärmequelleneinheit (21) ausführbar wird und gestartet wird, nachdem der Entfrostungsbetrieb der ersten Wärmequelleneinheit (11) gestoppt wurde, die erste Steuereinheit (17) eingerichtet ist, den Entfrostungsbetrieb der ersten Wärmequelleneinheit (11) zu starten, und wobei in einem Fall, wenn der Erwärmungsbetrieb der ersten Wärmequelleneinheit (11) ausführbar wird und gestartet wird, nachdem der Entfrostungsbetrieb der zweiten Wärmequelleneinheit (21) gestoppt wurde, die zweite Steuereinheit (27) eingerichtet ist, den Entfrostungsbetrieb der zweiten Wärmequelleneinheit (21) zu starten.

6. Wärmepumpen-Wasserkühlungs- und Erwärmungssystem nach Anspruch 4 oder 5,
wobei jede von der ersten Wärmequelleneinheit (11) und der zweiten Wärmequelleneinheit (21) einen Verdichter (13, 23) aufweist,
wobei die erste Steuereinheit (17) eingerichtet ist, zu bestimmen, dass der Erwärmungsbetrieb der zweiten Wärmequelleneinheit (21) nicht ausführbar ist, wenn der Verdichter (23) der zweiten Wärmequelleneinheit (21) ausfällt, und
wobei die zweite Steuereinheit (27) eingerichtet ist, zu bestimmen, dass der Erwärmungsbetrieb der ersten Wärmequelleneinheit (11) nicht ausführbar ist, wenn der Verdichter (13) der ersten Wärmequelleneinheit (11) ausfällt.

## Revendications

1. Système de chauffage et de refroidissement d'eau de pompe à chaleur qui comprend :
une première unité de source de chaleur (11) qui comprend un échangeur thermique à eau (14) et un échangeur thermique à air (16) ;
une seconde unité de source de chaleur (21) qui comprend un échangeur thermique à eau (24) et un échangeur thermique à air (26) ;
et une unité de commande (17, 27) configurée pour déclencher une opération de chauffage durant laquelle l'échangeur thermique à air (16, 26) sert d'évaporateur et une opération de dégivrage durant laquelle l'échangeur thermique à air (16, 26) sert de condenseur,
**caractérisé en ce qu'**il comprend en outre :
un point de jonction (40a) au niveau duquel l'eau froide ou l'eau chaude qui sort de l'échangeur thermique à eau (14) de la première unité de source de chaleur (11) et l'eau froide ou l'eau chaude qui sort de l'échangeur thermique à eau (24) de la seconde unité de source de chaleur (21) se rejoignent,
dans lequel, lorsqu'une unité de source de chaleur (11, 21) parmi la première unité de source de chaleur (11) et la seconde unité de source de chaleur (21) effectue l'opération de chauffage et une autre unité de source de chaleur (11, 21) parmi la première unité de source de chaleur (11) et la seconde unité de source de chaleur (21) effectue l'opération de dégivrage, l'unité de commande (17, 27) est configurée pour arrêter l'opération de dégivrage de l'autre unité de source de chaleur (11, 21) et pour réduire un volume d'eau qui sort de l'échangeur thermique à eau de l'autre unité de source de chaleur jusqu'au point de jonction lorsque l'opération de chauffage de l'une unité de source de chaleur (11, 21) devient inexécutable.

2. Système de chauffage et de refroidissement d'eau de pompe à chaleur selon la revendication 1, dans lequel, lorsque l'opération de chauffage de l'une unité de source de chaleur (11, 21) devient inexécutable et est lancée après que l'opération de dégivrage de l'autre unité de source de chaleur (11, 21) a été arrêtée, l'unité de commande (17, 27) est configurée pour démarrer l'opération de dégivrage de l'autre unité de source de chaleur (11, 21).

3. Système de chauffage et de refroidissement d'eau de pompe à chaleur selon la revendication 1 ou 2,
dans lequel chacune parmi la première unité de source de chaleur (11) et la seconde unité de source de chaleur (21) comprend un compresseur (31, 23), et
dans lequel l'unité de commande (17, 27) est configurée pour déterminer que l'opération de chauffage de l'une unité de source de chaleur (11, 21) est inexécutable lorsque le compresseur (13, 23) de l'une unité de source de chaleur (11, 21) tombe en panne.

4. Système de chauffage et de refroidissement d'eau de pompe à chaleur selon l'une quelconque des revendications 1 à 3, dans lequel l'unité de commande (17, 27) comprend
une première unité de commande (17) configurée pour contrôler la première unité de source de chaleur (11), et
une seconde unité de commande (27) configurée pour contrôler la seconde unité de source de chaleur (21),
dans lequel, lorsque la première unité de source de chaleur (11) effectue l'opération de dégivrage et la seconde unité de source de chaleur (21) effectue l'opération de chauffage, la première unité de commande (17) est configurée pour arrêter l'opération de dégivrage de la première unité de source de chaleur (11) et pour réduire un volume d'eau qui sort de l'échangeur thermique à eau de la première unité de source de chaleur (11) jusqu'au point de jonction lorsque l'opération de chauffage de la seconde unité de source de chaleur (21) devient inexécutable, et
dans lequel, lorsque la première unité de source de chaleur (11) effectue l'opération de chauffage et la seconde unité de source de chaleur (21) effectue l'opération de dégivrage, la seconde unité de commande (27) est configurée pour arrêter l'opération de dégivrage de la seconde unité de source de chaleur (21) et pour réduire un volume d'eau qui sort de l'échangeur thermique à eau de la seconde unité de source de chaleur (21) jusqu'au point de jonction lorsque l'opération de chauffage de la première unité de source de chaleur (11) devient inexécutable.

5. Système de chauffage et de refroidissement d'eau de pompe à chaleur selon la revendication 4, dans lequel, lorsque l'opération de chauffage de la seconde unité de source de chaleur (21) devient exécutable et est lancée après que l'opération de dégivrage de la première unité de source de chaleur (11) a été arrêtée, la première unité de commande (17) est configurée pour démarrer l'opération de dégivrage de la première unité de source de chaleur (11), et
dans lequel, lorsque l'opération de chauffage de la première unité de source de chaleur (11) devient exécutable et est lancée après que l'opération de dégivrage de la seconde unité de source de chaleur (21) a été arrêtée, la seconde unité de commande (27) est configurée pour démarrer l'opération de dégivrage de la seconde unité de source de chaleur (21).

6. Système de chauffage et de refroidissement d'eau de pompe à chaleur selon la revendication 4 ou 5,
dans lequel chacune parmi la première unité de source de chaleur (11) et la seconde unité de source de chaleur (21) comprend un compresseur (13, 23),
dans lequel la première unité de commande (17) est configurée pour déterminer que l'opération de chauffage de la seconde unité de source de chaleur (21) est inexécutable lorsque le compresseur (23) de la seconde unité de source de chaleur (21) tombe en panne, et
dans lequel la seconde unité de commande (27) est configurée pour déterminer que l'opération de chauffage de la première unité de source de chaleur (11) est inexécutable lorsque le compresseur (13) de la première unité de source de chaleur (11) tombe en panne.
